# EUROPÄISCHE PATENTSCHRIFT

(11) **EP 1 949 949 B1**
(45) Veröffentlichungstag und Bekanntmachung des Hinweises auf die Patenterteilung: **26.12.2012**
(21) Anmeldenummer: 07000904.8
(22) Anmeldetag: 17.01.2007
(51) Int. Cl.: B01D 29/96

(54) **Filtervorrichtung**
Filter device
Dispositif de filtre

(43) Veröffentlichungstag der Anmeldung: 30.07.2008
(73) Patentinhaber: HAWE Hydraulik SE, 81673 München (DE)
(72) Erfinder: Macit, Recep, 81673 München (DE); Stönner, Christoph, 80639 München (DE)
(74) Vertreter: Grünecker, Kinkeldey, Stockmair & Schwanhäusser

(56) Entgegenhaltungen:
- EP-A- 1 714 688
- DE-A1- 4 243 217
- US-A1- 2004 016 687
- US-A1- 2005 000 886

## Beschreibung

Die Erfindung betrifft eine Filtervorrichtung der im Oberbegriff des Patentanspruchs 1 angegebenen Art.

Bei der aus DE 42 43 217 A bekannten Filtervorrichtung ist der deckelseitige Stutzen mit dem Deckel verrastet. Das obere Ende des rohrförmigen Filterelementes ist mit einer angeklebten, L-förmigen Ringscheibe armiert, die auf die konische Außenseite des oberen Stutzens so aufgeschoben ist, dass bei Abnahme des Deckels das Filterelement mit aus dem Gehäuse heraus- und mit dem unteren Ende vom unteren Stutzen abgezogen werden soll. Da die an beiden Enden des Filterelementes angeklebten Ringscheiben aus Filtermaterial bestehen, sich im Betrieb vollsaugen, dadurch weich werden, und auch Öl zwischen dem Innendurchmesser der jeweiligen Ringscheibe und dem Außenumfang des jeweiligen Stutzens vorliegt und schmiert, lässt die Haltewirkung nach und ist nicht sichergestellt, dass das vollgesaugte und schwere Filterelemente auch tatsächlich mit dem Deckel herausgezogen werden kann. Bleibt das Filterelement im Behälter, muss es mit der Hand oder einem Werkzeug entnommen werden. Außerdem besteht permanent die Gefahr, dass nur wenig oder kaum gefiltertes Schmutzöl dort durchleckt, wo die Ringscheiben auf den oberen und unteren Stutzen sitzen.

Bei einer aus US 2004/0016687 A bekannten Filtervorrichtung ist das separate Bypassventil mit einem Montierkragen im oberen Stutzen eingebaut. Das rohrförmige Filterelement sitzt mit endseitigen Ringscheiben auf den oberen und unteren Stutzen.

Die aus EP 0 817 668 A bekannte Filtervorrichtung ist ein Nebenstrom-Filteraggregat, das unabhängig von dem Hydraulikaggregat, dem es zugeordnet ist, eine eigene Pumpe aufweist, um Verschmutzungen aus dem Hydrauliköl im Nebenstrombetrieb mit einem gegenüber dem Hauptstrombetrieb wesentlich niedrigeren Druck zurückzuhalten (z.B. 300 bar gegenüber 20 bar). Das bei Funktionsunfähigkeit des Filterelementes selbsttätig ansprechende Bypassventil ist im Gehäuseboden untergebracht. Das Halteelement am Deckel für das obere Ende des Filterelementes ist ein Nippel, der in eine schlüssellochförmige Öffnung im oberen Ende des Filterelementes einsetzbar und durch eine seitliche Bewegung darin festlegbar ist, um das Filterelement mit dem Deckel zu koppeln. Zum Auffangen von Schmutzöl beim Filterelementwechsel ist das sich vom oberen Ende des Filterelementes unterscheidende untere Ende des Filterelementes mit einem nach innen hochgezogenen Boden versehen. Bei einer Ausführungsform wird das Filterelement mit dem Deckel und einem mit dem Deckel verschraubten, zentralen Stehrohr entnommen, auf dem das untere Ende des Filterelementes von unten her aufgefädelt und abgedichtet ist, um ein größeres Volumen zum Rückhalten von Schmutzöl im Inneren des Filterelementes zu bilden. Das Filterelement sitzt in dieser Ausführungsform nur mit einem Presssitz auf dem unteren Ende des Stehrohrs. Funktionell sind im Übrigen Nebenstrom-Filtervorrichtungen nicht mit Hauptstrom-Filtervorrichtungen vergleichbar, weil Hauptstrom-Filtervorrichtungen den wesentlich höheren Hauptstromdruck permanent verkraften und unabhängig vom Verschmutzungszustand des Filterelementes die Strömung im Hauptstromkreis sicherstellen müssen, während Nebenstromfilteranlagen nicht nur den geringen Nebenstromdruck vertragen müssen, sondern bei Ausfall keinen nachteiligen Einfluss auf die Strömung im Hauptstromkreis haben. Unter anderem ist aus diesem Grund bei der bekannten Nebenstrom-Filtervorrichtung die Außenbegrenzung des Gehäuses eine wenig druckfeste, dünne und nur durch Bördeln festgelegte Hülle.

Der Erfindung liegt die Aufgabe zugrunde, eine Filtervorrichtung der eingangs genannten Art anzugeben, die kompakte Abmessungen hat, baulich einfach und beim Filterelementwechsel service- und wartungsfreundlich ist. Teil der Aufgabe ist es auch, die Filtervorrichtung so zu gestalten, dass sie im Hauptstrom brauchbar ist, und fertigungstechnisch und wirtschaftlich optimiert ist.

Die gestellte Aufgabe wird mit den Merkmalen des Patentanspruchs 1 gelöst.

Da das Bypassventil im Deckel angeordnet ist, lassen sich die Abmessungen der Filtervorrichtung reduzieren, d.h. kompakte Abmessungen erzielen. Da ferner das im Deckel angeordnete Bypassventil das Halteelement für das obere Ende des Filterelementes bildet, übernimmt das Bypassventil eine zweite Funktion, was eine bauliche Vereinfachung der Filtervorrichtung mit sich bringt, und auch die gewünschte Service- und Wartungsfreundlichkeit beim Elementwechsel erzielen lässt, da das Filterelement bei eingesetztem Deckel mit dem Bypassventil gekoppelt und durch dieses positioniert ist, und beim Entnehmen des Deckels mit dem Bypassventil aus dem Gehäuse herausgezogen wird. Das in den Deckel integrierte Bypassventil bietet ferner den Vorteil, nach Entfernen des verschmutzten Filterelementes zur Reinigung gut zugänglich zu sein, um die Betriebssicherheit vor allem im Hauptstrombetrieb jederzeit gewährleisten zu können. Dabei weist das Bypassventil den von der Deckelunterseite vorstehenden Stutzen auf, der das Haltelement bildet. Auch diesem Stutzen ist eine duale Funktion zugewiesen, da er einerseits zum Umleiten des Schmutzöls bei Ansprechen des Bypassventils benutzt wird, und andererseits zum Positionieren, Festlegen und vor allem zum Herausziehen des Filterelementes bei einem Filterelementwechsel. Zwischen dem oberen Ende des Filterelementes und dem Stutzen wird eine axiale Steckverbindung hergestellt, die bequem zu handhaben ist und beim Einbau des neuen Filterelementes den Vorteil bildet, dass das Filterelement zunächst im Gehäuse installiert werden kann, ehe der Deckel aufgesetzt und festgelegt wird, weil allein durch die axiale Festlegung des Deckels im Gehäuse diese Steckverbindung hergestellt wird. Zwischen dem Außenumfang des oberen Stutzens und der Innenwand des Filterelementes ist zumindest ein O-Ring angeordnet ist, der nicht nur zur Abdichtung vorgesehen ist, um das Schmutzöl durch das Filterelement zu zwingen, sondern der zumindest als Filterelement-Herauszieh-Hilfselement dient. Somit übernimmt auch der O-Ring zwei Funktionen, für die er naturgemäß bestens geeignet ist. Der O-Ring ist mit anderen Worten ein formschlüssiges Rastelement, das das Filterelement beim Herausziehen mitnimmt, das spätere Abnehmen des verschmutzten Filterelementes aber genauso bequem zulässt, wie das erneute Festlegen des neuen Filterelementes. Um die Betriebssicherheit und Wirksamkeit des O-Rings als Hilfselement sicherzustellen, ist im Außenumfang des oberen Stutzens eine O-Ring-Aufnahme vorgesehen, in der der O-Ring formschlüssig einrastet. Vorzugsweise ist dies eine Umfangsnut mit einer Tiefe, die geringer ist als die halbe O-Ring-Stärke. Über diesen Formschluss, der gegebenenfalls auch durch eine Mitnahmeschulter am Außenumfang des Stutzens erzeugt werden könnte, wirkt der O-Ring als Mitnehmer beim Herausziehen des Filterelementes aus dem Gehäuse. Hiermit ist der O-Ring im Filterelement in einer in der Innenwand des Filterelementes vorgesehenen Haltenut positioniert sein. Der O-Ring ist sozusagen in das Filterelement integrierter Bestandteil, der verhindert, dass das Schmutzöl einen falschen Weg nehmen könnte, aber auch gleichzeitig zum Festlegen und vor allem Herausziehen des Filterelementes benutzt wird.

Bei einer zweckmäßigen Ausführungsform ist der Schmutzöl-Auslassstutzen mit dem Deckel einstückig ausgebildet. Diese Anordnung trägt zu den kompakten Abmessungen der Filtervorrichtung bei.

Auch das untere Ende des Filterelementes ist auf ähnliche oder gleiche Weise wie das obere Ende positioniert und festgelegt. Der Außenumfang des am Behälterboden zum Positionieren des unteren Filterelementendes vorstehender Stutzen ist dem Außenumfang des Schmutzöl-Auslassstutzens zumindest im Wesentlichen gleich Da sichergestellt sein muss, dass die Haltekraft für das Filterelement am unteren Ende geringer ist als am oberen Ende, damit das Filterelement bei Herausnahme des Deckels zuverlässig mitentnommen werden kann, ist bzw. sind der Außendurchmesser und/oder die Tiefe der O-Ring-Aufnahme des unteren Stutzens geringer als der Außendurchmesser und/oder die Tiefe beim oberen Stutzen. Die Haltewirkung der axialen Steckverbindung ist somit beim unteren Filterende schwächer als beim oberen. Auch die Montagesicherheit ist erhöht, da das Filterelement beliebig eingesetzt werden kann, und dennoch richtig installiert wird.

Damit bei Entnahme des verschmutzten Filterelementes möglichst viel von dem im Filterelement vorliegenden Schmutzöl oder abgelagerte Verschmutzungen problemlos mitentnommen werden können, ist es nach einem weiteren, wichtigen Gesichtspunkt zweckmäßig, wenn im Filterelement in zumindest einem Ende innenseitig ein rohrabschnittsförmiger Fangkragen vorgesehen ist, der mit dem Filterelement einstückig ausgebildet und sogar aus dem Filtermaterial hergestellt ist und einen Totraum definiert, in welchem Schmutzöl und abgelagerte Verschmutzungen gesammelt bleiben, wenn das Filterelement herausgehoben wird. Im Hinblick auf den symmetrischen Filterelementaufbau, d.h. gleichartige Enden, ist es zweckmäßig, wenn an beiden Enden jeweils ein solcher Fangkragen in das Filterelement integriert ist. Der in der Einbaulage des Filterelementes, die beliebig gewählt werden kann, obenliegende Fangkragen hat zwar nicht unbedingt eine Funktion zum Mitnehmen von abgelagerten Verschmutzungen oder Schmutzöl, hat aber dennoch die Funktion, bei der Festlegung, Positionierung und beim Herausziehen des Filterelementes mitzuwirken.

Erneut im Hinblick auf die fertigungstechnische und wirtschaftliche Optimierung wird auch ein symmetrischer Filtergehäuseaufbau dadurch realisiert, dass bei einer zweckmäßigen Ausführungsform das Gehäuse als Außenbegrenzung einen Rohrabschnitt mit endseitigen Innengewindeabschnitten für den Deckel und den Behälterboden aufweist, wobei, vorzugsweise, die beiden Enden des Rohrabschnitts gleichartig ausgebildet sind.

Schließlich ist es zweckmäßig, wenn jeder Stutzen am Außenumfang eine Aufschieberampe aufweist, die das Auffädeln des jeweiligen O-Rings ohne dessen Beschädigung erleichtert und zur Service- und Wartungsfreundlichkeit beiträgt.

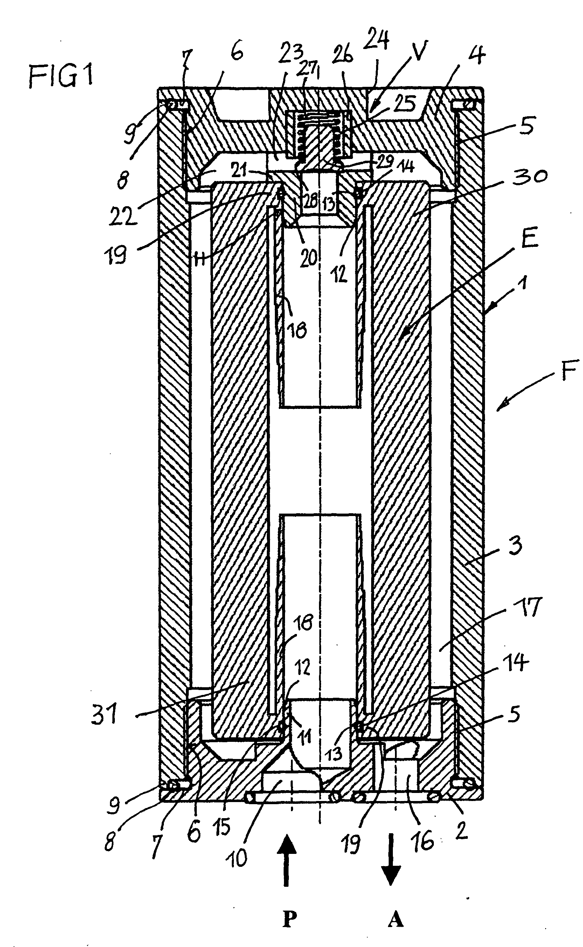

Eine Ausführungsform des Erfindungsgegenstandes wird anhand von Fig. 1 erläutert, die ein Achsschnitt einer Filtervorrichtung ist.

Eine Filtervorrichtung F in Fig. 1, die, vorzugsweise, als Hauptstrom-Filtervorrichtung für stationäre oder mobile Hydraulikaggregate verwendet wird, weist ein aufrechtstehendes Gehäuse 1 mit einem die äußere Begrenzung des Gehäuses 1 bildenden Rohrabschnitt 3, einem Gehäuseboden 2 im unteren Ende des Rohrabschnitts 3 und einem herausnehmbaren Deckel 4 im oberen Ende des Rohrabschnitts 3 auf. Im Gehäuse 1 ist ein Filterelement E beispielsweise in Form einer rohrförmigen Filterkerze enthalten, das von innen nach außen durchströmt wird. In den Deckel 4 ist ein Bypassventil V eingegliedert, das selbsttätig das Filterelement E umgeht, sofern das Filterelement beispielsweise durch Verschmutzung funktionsunfähig geworden sein sollte.

Im Gehäuse- oder Behälterboden 2 ist ein Schmutzöleinlass 10 relativ zentral vorgesehen, der mit der Druckseite einer nicht gezeigten Pumpe verbunden ist (Strömungsrichtung P). Daneben ist ein Reinölauslass 16 im Gehäuseboden 2 geformt, der beispielsweise mit einem Verbraucheranschluss oder einem Hydrauliköl-Reservoir (nicht gezeigt) (Strömungsrichtung A) verbunden ist.

Der Rohrabschnitt 3 ist, vorzugsweise, an beiden Enden gleich ausgebildet, d.h., er besitzt jeweils einen Innengewindeabschnitt 5, und einen äußeren Anlageringflansch 9. Der Gehäuseboden 2 weist, wie der Deckel 4, einen Außengewindeabschnitt 5 und eine Anlageschulter 7 auf, die zum Komprimieren eines abdichtenden O-Rings 8 dienen kann. Im Gehäuseboden 2 ist in Verbindung mit dem Schmutzöleinlass 10 ein vom Gehäuseboden 2 mittig vorstehender Schmutzöl-Einlassstutzen 11 geformt, der an seinem freien Ende eine Aufschieberampe 12 und im Außenumfang, vorzugsweise, eine O-Ring-Aufnahme, z.B. eine Umfangsnut 13 aufweist. Im unteren Ende 31 des Filterelementes E ist eine innenseitige Aufnahmenut 15 geformt, in der ein O-Ring 14 positioniert ist, der bei ordnungsgemäß installiertem Filterelement E in der Aufnahmenut 13 eingerastet ist. Im unteren Ende 31 des Filterelementes ist, wie, vorzugsweise, auch im oberen Ende 30 des Filterelementes E, ein Schmutzöl-Fangkragen 18 einstückig eingeformt, beispielsweise aus dem Filtermaterial des Filterelementes E. Der Fangkragen 18 ist über einen Bereich 19 einstückig mit dem Filterelement E verbunden. In diesem Bereich ist die innenseitige Aufnahmenut 15 für den O-Ring 14 geformt.

Das in den Deckel 4 integrierte Bypassventil V weist einen nach unten vorstehenden Schmutzöl-Auslassstutzen 20 auf, der in seinem Außenumfang zumindest im Wesentlichen gleich ausgebildet ist wie der Außenumfang des anderen Stutzens 11. So besitzt der Schmutzöl-Auslassstutzen 20 die O-Ring-Aufnahme in Form einer Umfangsnut 13 und auch die Aufschieberampe 12, die das leichte Aufschieben des O-Rings 14 ermöglicht. Der Stutzen 20 begrenzt einen Innenkanal, der zu einer Kammer 25 des Bypassventils führt und an einem Ventilsitz 28 für ein Schließelement 29 endet. Das Schließelement 29 ist zusammen mit einer Schließfeder 27 in der Kammer 25 untergebracht, die zum Teil vom Deckel und/oder auch vom Stutzen 20 begrenzt wird. Bei der gezeigten Ausführungsform ist, beispielsweise, in die Kammer 25 eine Hülse 26 eingepresst. Aus der Kammer 25 führen Auslässe 23 zu einem Leerraum 22 oberhalb des oberen Endes des Filterelementes E, der mit einem äußeren Ringraum 17 des Gehäuses 1 in Verbindung steht. Der Ringraum 17 ist seinerseits direkt mit dem Reinölauslass 16 verbunden, so dass im Gehäuse 1 enthaltenes Reinöl ohne nennenswerten Strömungswiderstand abfließen kann, insbesondere wenn der Deckel 4 beim Entnehmen den Zutritt von Luft ermöglicht. Am Anschlussstutzen 20 ist ferner eine Anlageschulter 21 für das obere Ende des Filterelementes E angeformt. Der Stutzen 20 kann mit dem Deckel 4 einstückig ausgebildet oder in diesen eingesetzt, z.B. eingeschraubt sein. Der Stutzen 20 dient zum Positionieren und auch Festlegen des oberen Endes 30 des Filterelementes E, in dem der O-Ring 14 in die Umfangsnut 13 einrastet und beim Entnehmen des Deckels als Halteelement H das Filterelement E nach oben herauszieht.

Da beide Enden des Filterelementes E gleichartig ausgebildet sind, wie auch beide Enden des Gehäuses 1, und auch beide Stutzen 20, 11, was herstellungstechnische Vorteile bietet, sollte zweckmäßig sichergestellt sein, dass die Haltewirkung für das obere Ende 30 beim Herausschraube des Deckels 4 stärker ist als die Haltewirkung am unteren Stutzen 11. Aus diesem Grund ist es zweckmäßig, wenn der Außendurchmesser und/oder die Tiefe der Umfangsnut 13 beim unteren Stutzen 11 geringer ist bzw. sind als beim oberen Stutzen 20.

Bei einer nicht gezeigten Ausführungsform könnte die Positionierung des O-Rings 14 zumindest am oberen Stutzen 20 durch einen unterhalb des O-Rings 14 nach außen vorspringenden Bund bewerkstelligt sein.

Bei einem Filterelementwechsel wird der Deckel 4 aus dem Rohrabschnitt 3 herausgeschraubt, beispielsweise mit Hilfe einer integrierten Drehhilfe 24, wobei das untere Ende 31 des Filterelementes E von dem unteren Stutzen 11 nach oben gezogen wird. Schmutzöl und abgelagerte Verschmutzungen innerhalb des unteren Auffangkragens 18 werden mit nach oben herausgezogen, ohne sich mit Reinöl im Gehäuse 1 zu vermischen. Das Reinöl aus der Ringkammer 17 kann gegebenenfalls ohnedies vollständig durch den Reinölauslass 16 abströmen, zumindest sobald nach Lösen der Deckelverschraubung Luft in das Gehäuse eintritt.

Bei einer nicht gezeigten Alternative könnte der Deckel 4 auch durch Befestigungsschrauben von oben her festgelegt sein, so dass der Deckel 4 nach Lösen dieser Befestigungsschrauben ohne Verdrehung nach oben herausgezogen werden kann, wodurch die rein axiale Steckverbindung zwischen dem Stutzen 20 und dem oberen Ende 30 des Filterelementes noch besser wirksam bleibt.

Obwohl die Filtervorrichtung F im Hauptstrom eingesetzt wird, wo beispielsweise Drücke bis zu 300 bar und mehr herrschen können, ist die Druckdifferenz über das Filterelement E dennoch relativ gering, z.B. nur um die 20 bar oder weniger.

Die Filtervorrichtung kann als Leitungsfilter in der Zu- oder der Ablaufseite eines hydraulischen Aggregats angeordnet sein. Der Gehäuseboden 2 kann axial oder radial an hydraulischen Komponenten festgelegt sein, wie an einem Ventil, einem Verteilerstück oder dgl..

Im Gehäuseboden 2 könnte ein Differenzdruckschalter angeordnet sein, welcher beim Überschreiten eines vorgegebenen Differenzdruckwertes elektrische Signale abgibt.

Es wäre auch möglich, ein Filterelement E einzusetzen, das nur im unteren Ende 31 einen Auffangkragen 18 aufweist. Die axiale Länge des Auffangkragens ist zweckmäßig so lang wie möglich, jedoch kürzer als die Hälfte der gesamte Länge des Filterelementes E. Anstelle eines integrierten Auffangkragens 18 könnte bei einer alternativen Ausführungsform ein in das Filterelement integriertes Rohr vorgesehen werden, das z.B. im mittleren Längsbereich des Filterelementes Durchströmöffnungen zum Durchlassen des Schmutzöls aufweist. Das in Fig. 1 gezeigte Filterelement enthält nur eine rohrförmige Filterkerze. Bei nicht gezeigten Varianten könnten auch mehrere rohrförmige Filterkerzen im Filterelement vereinigt sein.

## Patentansprüche

1. Filtervorrichtung (F), insbesondere im Hauptstrom eines Mobil- oder Stationär-Hydraulikaggregats, mit einem stehenden, oben durch einen herausnehmbaren Deckel (4) verschlossenen Gehäuse (1) für ein zumindest eine rohrförmige Filterkerze aufweisendes, durchströmbares Filterelement (E), einem Bypassventil (V) im Strömungsweg von einem Schmutzölzulauf (10) zu einem Reinölablauf (16) des Gehäuses, einem am Deckel (4) angeordneten Halteelement (H) zum Positionieren und Halten des oberen Endes (30) des mit Herausnahme des Deckels (4) aus dem Gehäuse (1) entnehmbaren Filterelementes (E), wobei das Bypassventil (V) im Deckel (4) angeordnet ist und einen von der Deckelunterseite vorstehenden Stutzen (20) aufweist, der als das Halteelement (H) dient, und wobei an einem Behälterboden (2) zum Positionieren des unteren Endes (31) des Filterelementes (E) ein vorstehender Stutzen (11) vorgesehen ist, dessen Außenumfang dem Außenumfang des oberen Stutzens (20) zumindest im Wesentlichen gleich ist, **dadurch gekennzeichnet, dass** zwischen dem Außenumfang des oberen Stutzens (20) und der Innenwand des Filterelementes (E) zumindest ein O-Ring (14) angeordnet ist, der zur Abdichtung und als Filterelement-Herauszieh-Hilfselement dient, dass im Außenumfang des oberen Stutzens (20) eine O-Ring-Aufnahme-Umfangsnut (13) vorgesehen ist, und dass der O-Ring (14) in einer in der Innenwand des Filterelementes (E) vorgesehenen Haltenut (15) positioniert ist.

2. Filtervorrichtung nach Anspruch 1, **dadurch gekennzeichnet, dass** die Umfangsnut im oberen Stutzen (20) mit einer Tiefe geringer als die halbe O-Ring-Stärke ausgebildet ist.

3. Filtervorrichtung nach Anspruch 1, **dadurch gekennzeichnet, dass** der Außendurchmesser und/oder die Tiefe einer O-Ring-Umfangsnut (13) des unteren Stutzens (11) geringer ist bzw. sind als der Außendurchmesser und/oder die Tiefe der O-Ring-Umfangsnut im oberen Stutzen (20).

4. Filtervorrichtung nach Anspruch 1, **dadurch gekennzeichnet, dass** jeder Stutzen (20, 11) am Außenumfang eine Aufschieberampe (12) aufweist.

5. Filtervorrichtung nach Anspruch 1, **dadurch gekennzeichnet, dass** das Gehäuse (1) als äußere Begrenzungswand einen Rohrabschnitt (3) mit endseitigen Innengewindeabschnitten (5) wahlweise für den Deckel (4) oder den Behälterboden (2) aufweist, und dass, vorzugsweise, die beiden Enden des Rohrabschnitts (3) gleich ausgebildet sind.

6. Filtervorrichtung nach Anspruch 1, **dadurch gekennzeichnet, dass** der obere Stutzen (20) mit dem Deckel (4) einstückig ausgebildet ist.

7. Filtervorrichtung nach wenigstens einem der vorhergehenden Ansprüche, **dadurch gekennzeichnet, dass** im Filterelement (E), vorzugsweise in jedem Ende (30, 31), innenseitig ein rohrabschnittsförmiger Schmutzöl-Fangkragen (18) vorgesehen ist, und dass das Filterelement (E) jeweils mit dem Schmutzöl-Fangkragen (18) auf dem Stutzen (11, 20) positioniert ist.

## Claims

1. Filter device (F), in particular in the main flow of a mobile or stationary hydraulic aggregate, comprising an upright standing housing (1) closed at the top by a removable lid (4), for a permeable filter element (E) comprising at least one tube shaped filter cartridge, a bypass valve (V) in a flow path of the housing from an inlet (10) for contaminated oil to an outlet (16) for purified oil, a holding element (H) arranged at the lid (4) for positioning and holding the upper end (30) of the filter element (E) which is removable when removing the lid (4) from the housing (1), wherein the bypass valve (V) is arranged in the lid (4) and has a nipple (20) protruding beyond the lower side of the lid, the nipple (20) serving as the holding element (H), and wherein a protruding nipple (11) is provided at a container bottom (2) for positioning the lower end (31) of the filter element (E), the outer periphery of the lower nipple (11) being substantially equal to the outer periphery of the upper nipple (20), **characterized in that** at least one O-ring (14) is arranged between the outer periphery of the upper nipple (20) and the inner wall of the filter element (E), which O-ring (14) serves both for sealing purposes and as an auxiliary element for pulling out the filter element, that a circumferential O-ring receiving groove (13) is provided in the outer periphery of the upper nipple (20), and that the O-ring (14) is positioned in a holding groove (15) provided in the inner wall of the filter element (E).

2. Filter device according to claim 1, **characterized in that** the circumferential groove in the upper nipple (20) is formed with a depth smaller than half of the thickness of the O-ring (14).

3. Filter device according to claim 1, **characterized in that** the outer diameter and/or the depth of a circumferential O-ring groove at the lower nipple (11) is or are smaller than the outer diameter and/or the depth of the circumferential O-ring groove at the upper nipple (20).

4. Filter device according to claim 1, **characterized in that** each nipple (20, 11) has a sliding ramp (12) at the outer periphery.

5. Filter device according to claim 1, **characterized in that** the housing (1) comprises as an outer boundary wall a tube section (3) having interior threads regions (5) at the ends selectively for the lid (4) or the container bottom (2), and that, preferably, both ends of the tube section (3) are formed equally.

6. Filter device according to claim 1, **characterized in that** the upper nipple (20) is unitarily formed with the lid (4).

7. Filter device according to at least one of the preceding claims, **characterized in that** in the filter element (E), preferably in each of its ends (30, 31), a catching collar (18) for contaminated oil is provided at the inner side and with the shape of a tube section, and that the filter element (E) is positioned respectively with one of the catching collars (18) for contaminated oil on the respective nipple (11, 20).

## Revendications

1. Dispositif de filtration (F), en particulier dans le circuit principal d'un groupe hydraulique mobile ou stationnaire, comprenant un boîtier (1) vertical, fermé en partie haute par un couvercle (4) amovible, pour un élément filtrant (E) pouvant être balayé par un flux et pourvu d'au moins une bougie filtrante tubulaire, une soupape de dérivation (V) dans le parcours d'écoulement d'une arrivée d'huile usagée (10) à une sortie d'huile épurée (16) du boîtier, un élément de retenue (H), disposé sur le couvercle (4), pour le positionnement et le maintien de l'extrémité supérieure (30) de l'élément filtrant (E), qui peut être extrait du boîtier (1) avec le retrait du couvercle (4), la soupape de dérivation (V) étant disposée dans le couvercle (4) et présentant une tubulure (20) dépassant du côté inférieur du couvercle, laquelle tubulure sert d'élément de retenue (H), et une tubulure en saillie (11) étant prévue sur un fond de réservoir (2) pour le positionnement de l'extrémité inférieure (31) de l'élément filtrant (E), tubulure dont le pourtour extérieur est au moins essentiellement égal au pourtour extérieur de la tubulure supérieure (20), **caractérisé en ce qu'**au moins un joint torique (14) est disposé entre le pourtour extérieur de la tubulure supérieure (20) et la paroi intérieure de l'élément filtrant (E), lequel joint sert à l'étanchéité et d'élément auxiliaire de retrait de l'élément filtrant, qu'une gorge périphérique (13) de logement de joint torique est prévue dans le pourtour extérieur de la tubulure supérieure (20), et que le joint torique (14) est positionné dans une gorge de retenue (15) prévue dans la paroi intérieure de l'élément filtrant (E).

2. Dispositif de filtration selon la revendication 1, **caractérisé en ce que** la gorge périphérique est réalisée dans la tubulure supérieure (20) avec une profondeur plus petite que la demi-épaisseur du joint torique.

3. Dispositif de filtration selon la revendication 1, **caractérisé en ce que** le diamètre extérieur et/ou la profondeur d'une gorge périphérique de joint torique (13) de la tubulure inférieure (11) est ou sont plus petits que le diamètre extérieur et/ou la profondeur de la gorge périphérique de joint torique dans la tubulure supérieure (20).

4. Dispositif de filtration selon la revendication 1, **caractérisé en ce que** chaque tubulure (20, 11) présente une rampe de glissement (12) sur le pourtour extérieur.

5. Dispositif de filtration selon la revendication 1, **caractérisé en ce que** le boîtier (1) présente, en tant que paroi de délimitation extérieure, une section tubulaire (3) avec des sections taraudées (5) du côté extrême, sélectivement pour le couvercle (4) ou le fond de réservoir (2), et que, de préférence, les deux extrémités de la section tubulaire (3) ont la même réalisation.

6. Dispositif de filtration selon la revendication 1, **caractérisé en ce que** la tubulure supérieure (20) a une réalisation monobloc avec le couvercle (4).

7. Dispositif de filtration selon l'une au moins des revendications précédentes, **caractérisé en ce qu'**il est prévu dans l'élément filtrant (E) du côté intérieur, de préférence à chaque extrémité (30, 31), un collet d'arrêt (18) d'huile usagée en forme de section tubulaire, et que l'élément filtrant (E) est positionné respectivement sur la tubulure (11, 20) avec le collet d'arrêt (18) d'huile usagée.
